# FASCICULE DE BREVET EUROPEEN

(11) **EP 2 453 073 B1**
(45) Date de publication et mention de la délivrance du brevet: **30.09.2015**
(21) Numéro de dépôt: 11187678.5
(22) Date de dépôt: 03.11.2011
(51) Int. Cl.: E04F 10/06, F24J 2/54, E06B 9/24

(54) **Store d'exterieur motorisé à alimentation photovoltaique**
Motorbetriebene Markise mit Fotovoltaik-Solarstromantrieb
Motorised outdoor blind with photovoltaic power supply

(30) Priorité: 16.11.2010 FR 1059390
(43) Date de publication de la demande: 16.05.2012
(73) Titulaire: Sunkeys, 14310 Villers Bocage (FR)
(72) Inventeur: Meunier, Stéphane, 14310 Tracy Bocage (FR)
(74) Mandataire: Ermeneux, Bertrand

(56) Documents cités:
- EP-A1- 0 916 781
- EP-A1- 1 942 245
- EP-A1- 2 159 848
- EP-A2- 1 845 218
- WO-A2-2010/054831
- DE-U1- 20 000 681

## Description

### 1. Domaine de l'invention

Le domaine technique de l'invention est celui des stores.

Plus précisément, l'invention concerne un dispositif d'occultation motorisé autonome en énergie, destiné à être monté à l'extérieur d'un bâtiment, par exemple pour protéger une terrasse des rayonnements du soleil, ou dans un lieu en plein air, à l'occasion par exemple d'un évènement festif.

### 2. Etat de la technique

On connait plusieurs types de stores d'extérieur tels que par exemple les stores bannes, les stores à cassette ou stores semi-coffre, les stores coffre, les stores à rails, ou les stores de vérandas se fixant sur un mûr d'un bâtiment, aussi connus sous l'appellation générique "stores de terrasse" ou store à projection à l'italienne.

Pour un confort d'utilisation, on a proposé des stores d'extérieur motorisés, qui permettent de déployer et de replier la toile d'occultation du store sans effort.

Actuellement, les moteurs des stores d'extérieur motorisé connus sont prévus pour être raccordés au réseau électrique.

Il est donc nécessaire de procéder à des travaux de raccordement électrique qui augmentent significativement la durée d'intervention effective pour mettre en place un store d'extérieur, et sont coûteux. Ces travaux s'avèrent notamment pénalisants si la longueur de câbles à prévoir pour raccorder le moteur est importante, et s'il faut prévoir une mise en conformité de l'installation électrique et/ou de réaliser des saignées pour masquer les câbles.

Les travaux de raccordement affectent par ailleurs l'esthétique du bâtiment, puisqu'ils imposent de percer un mur ou une huisserie de fenêtre pour passer les câbles d'alimentation du moteur par l'intérieur, ou de faire cheminer les câbles d'alimentation en façade dans le cas d'un raccordement à une alimentation électrique située à l'extérieur, ou encore de poser des boites de dérivation et/ou des goulottes apparentes, en l'absence de saignées.

Afin de remédier à cet inconvénient, on a pensé à alimenter le moteur d'un store d'extérieur motorisé en énergie solaire photovoltaïque.

On connait par exemple des techniques d'alimentation en énergie solaire photovoltaïque mises en oeuvre avec succès pour des volets roulants ou des stores de fenêtre. La puissance requise pour actionner un store d'extérieur est cependant nettement plus importante que celle d'un volet roulant ou d'un store de fenêtre, et de ce fait, ces techniques sont difficilement transposables à un store d'extérieur.

On constate ainsi en pratique que les techniques de stores d'extérieur motorisés connues se limitent à utiliser l'énergie photovoltaïque comme une source d'énergie d'appoint pour alimenter le moteur triphasé du store, en complément du réseau électrique.

On connait du document EP-A1-0 916 781 un store banne équipé de panneaux solaires, montés en parallèle, permettant de recharger des batteries d'accumulation assurant l'alimentation en électricité du moteur entraînant le tube enrouleur et de dispositifs d'éclairage.

Il existe donc une demande de solutions techniques permettant de faire fonctionner un store d'extérieur à partir d'énergie solaire photovoltaïque et qui soit économiquement viables.

### 3. Objectifs de l'invention

L'invention a donc notamment pour objectif de pallier les inconvénients de l'état de la technique cités ci-dessus.

Plus précisément l'invention a pour objectif de fournir une technique de store d'occultation d'extérieur motorisé autonome en énergie, alimenté exclusivement par de l'énergie solaire photovoltaïque, et ne nécessitant donc pas d'être connecté au réseau électrique.

Un objectif de l'invention est également de fournir une telle technique qui soit d'un coût de revient réduit.

Un autre objectif de l'invention est de fournir une telle technique qui soit simple à mettre en oeuvre et à installer.

L'invention a également pour objectif de fournir une telle technique qui soit fiable et aisée à entretenir.

Encore un objectif de l'invention est de proposer une telle technique qui soit peu encombrante, et qui soit acceptable sur un plan esthétique.

### 4. Explosé de l'invention

Ces objectifs, ainsi que d'autres qui apparaitront par la suite sont atteints à l'aide d'un dispositif d'occultation motorisé d'extérieur selon la revendication 1.

Il peut notamment s'agir d'un store banne, d'un store à cassette, d'un store coffre, ou d'un store de véranda équipé de bras d'entraînement articulés ou télescopiques, ou d'un store à rails d'entraînement coulissants.

Dans le cadre de l'invention, le terme "occultation" doit être entendu comme faisant référence aussi bien à une occultation totale ne laissant filtrer aucune composante du rayonnement solaire, qu'à une occultation partielle, encore appelée protection solaire, permettant d'atténuer le rayonnement solaire.

Ainsi, de façon inédite, l'invention propose de mettre en oeuvre un moteur électrique à courant continu alimenté de façon autonome par au moins deux modules solaires photovoltaïques, ou panneaux solaires photovoltaïques, montés en série.

L'utilisation d'un moteur à courant continu permet ainsi de s'affranchir des pertes d'énergie résultant d'une transformation du courant continu délivré par les modules photovoltaïques en courant alternatif, et est donc particulièrement économe en énergie. D'autre part un moteur à courant continu s'échauffant lentement, l'invention permet de manoeuvrer la toile de façon répétée et par exemple jusqu'à soixante-dix fois successives, sans risque de déclencher une protection thermique du moteur.

L'invention propose par ailleurs une solution particulièrement économique. En effet, on augmente astucieusement la tension d'alimentation du moteur en utilisant des modules solaires photovoltaïques en série, ce qui permet d'utiliser des panneaux solaires ordinaires pour alimenter un moteur convenant pour entraîner le tube d'enroulement du store d'extérieur.

On obtient en outre un dispositif monobloc aisé à poser, constitué de l'assemblage d'un store, d'un boitier électrique et de panneaux solaires photovoltaïques.

On optimise par ailleurs le captage d'énergie solaire en fonction du lieu d'implantation du dispositif d'occultation, et de son orientation.

Selon un aspect particulier de l'invention, lesdits modules solaires photovoltaïques sont sensiblement identiques.

Il peut également être envisagé de mettre en oeuvre des modules solaires photovoltaïques de caractéristiques différentes.

Selon un mode de réalisation particulièrement avantageux de l'invention, ledit moteur est agencé de sorte à être alimenté sous une tension nominale de 24V.

Il suffit ainsi de monter en série deux modules solaires photovoltaïques ordinaires pour faire fonctionner le moteur, ce qui est particulièrement économique, et peu encombrant.

Par ailleurs, l'utilisation de basses tensions présente des gages de sécurité pour l'utilisateur.

Préférentiellement, un tel dispositif d'occultation comprend un dispositif de variation de la tension d'alimentation dudit moteur électrique activé lors du déploiement ou du repliement de ladite toile.

On peut ainsi augmenter ou diminuer la vitesse de rotation du moteur en faisant varier sa tension d'alimentation, de sorte à adapter la puissance nécessaire pour continuer à déployer ou à replier la toile en fonction des capacités du moteur.

Un tel dispositif de variation de la tension d'alimentation peut avantageusement être incorporé à l'électronique embarquée associée au moteur.

De façon avantageuse, un tel dispositif d'occultation comprend un relai à contact à ouverture et un relai à contact à fermeture actionné par des moyens de commande à distance, de façon à permettre un changement de sens de rotation dudit moteur.

On peut ainsi commander simplement le déploiement ou le repliement total ou partiel de la toile d'occultation à distance, par exemple à l'aide d'un émetteur radio, d'un émetteur à infrarouges ou d'un émetteur à ultrasons.

En outre, l'usage de relais de type télérupteur est peu coûteux.

De façon préférentielle, un tel dispositif d'occultation comprend un régulateur de charge solaire à modulation de largeur d'impulsion.

Ainsi, on optimise la charge de l'unité d'accumulateurs.

Dans au moins un mode de réalisation particulièrement avantageux de l'invention, lesdits relais et/ou ledit régulateur de charge solaire sont logés dans ledit boitier étanche et isolé.

Ce boitier est destiné par exemple à protéger ces éléments électriques des intempéries, des particules de poussière, des insectes, ... et du rayonnement d'autres appareils électriques. L'isolation thermique du boîtier protège par ailleurs les composants électriques et les batteries d'un dysfonctionnement du à une surchauffe ou au froid.

Le dispositif de protection de la toile et/ou des moyens d'entraînement sur lequel se fixe le boîtier peut par exemple être un auvent, une cassette ou un coffre.

Selon un aspect particulier de l'invention, ledit élément orientable coopère avec une lumière en arc de cercle formée sur ledit boitier.

D'autres formes de lumière adaptées peuvent également être prévues. Il peut également être envisagé de former une pluralité de lumières sur le boîtier.

Dans au moins un mode de réalisation particulier de l'invention, ladite unité d'accumulateurs comprend deux batteries d'accumulateurs sensiblement identiques montées en série.

On peut ainsi réduire l'encombrement en hauteur et/ou en largeur du boitier en disposant ces batteries l'une à côté de l'autre.

Avantageusement, un dispositif d'occultation tel que ceux décrits ci-dessus comprend des moyens d'éclairage montés sous ledit tube d'enroulement et alimentés par ladite unité d'accumulateurs.

Il peut notamment s'agir d'un éclairage direct ou indirect, par exemple par l'intermédiaire de lampes à led (acronyme de diode électroluminescente en anglais) peu consommatrices d'énergie et possédant une durée de vie importante.

### 5. Liste des figures

D'autres caractéristiques et avantages de l'invention apparaitront plus clairement à la lecture de la description suivante d'un mode de réalisation de l'invention, donné à titre de simple exemple illustratif et non limitatif, et des dessins annexés parmi lesquels :
- la figure 1 illustre un mode de réalisation d'un dispositif d'occultation de type store banne selon l'invention, dans une vue schématique en perspective ;
- la figure 2 détaille le contenu du boîtier électrique du dispositif d'occultation présenté en référence à la figure 1 ;
- les figures 3A et 3B sont des schémas électriques respectivement de la partie puissance et de la partie commande de l'ensemble de commutation à distance du boîtier présenté figure 2 ;
- la figure 4 est une vue schématique en perspective du boîtier représenté seul ;
- la figure 5 est une vue latérale partielle du dispositif d'occultation représenté en référence à la figure 1, centrée sur une extrémité du tube d'enroulement.

### 6. Description détaillée de l'invention

### 6.1. Rappel du principe de l'invention

Comme déjà indiqué, le principe de l'invention repose notamment sur la mise en oeuvre de modules solaires photovoltaïques montés en série pour alimenter le moteur à courant continu d'un store d'extérieur motorisé autonome en énergie.

### 6.2. Exemple de mode de réalisation de l'invention

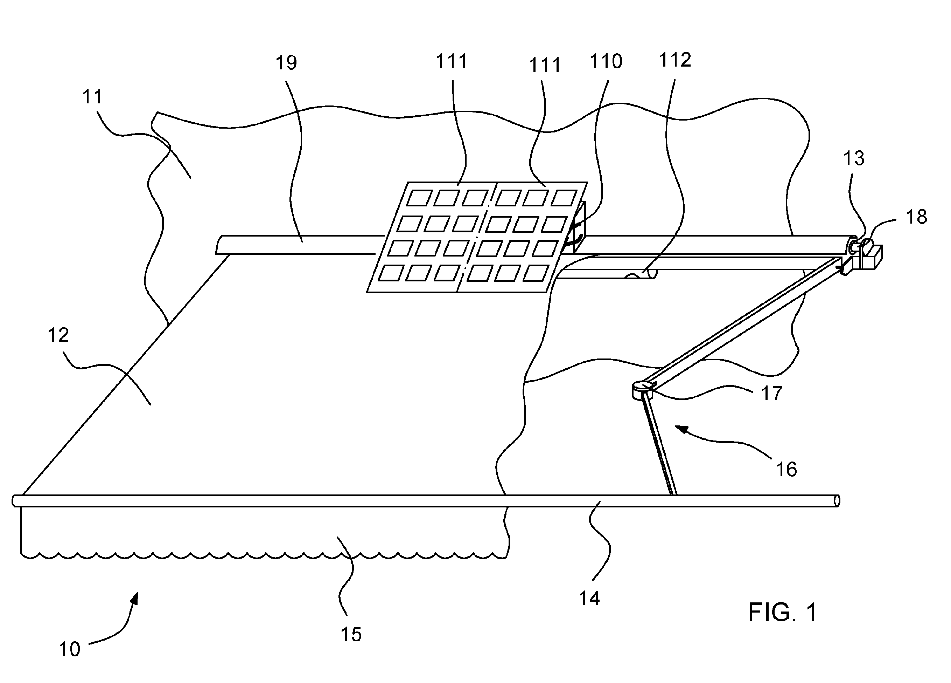

On a illustré sur la figure 1, un exemple de mode de réalisation d'un dispositif d'occultation 10 selon l'invention, dans une vue schématique en perspective.

Sur la figure 1, le dispositif d'occultation 10 forme un ensemble monobloc porté par des consoles fixées à la façade 11.

Il convient de noter que la pose du dispositif d'occultation 10 a requis seulement une heure à un professionnel, et n'a exigé aucune opération de raccordement. On comprend donc que ce dispositif d'occultation selon l'invention est particulièrement simple à installer et à entretenir pour un professionnel.

Plus précisément la pose du dispositif s'est limitée à fixer les consoles sur la façade dans une première étape, puis dans une deuxième étape à rapporter le dispositif d'occultation sur les consoles et, dans une troisième étape à régler l'inclinaison des modules solaires photovoltaïques intégré à ce dispositif, comme on le verra de façon plus détaillée dans la suite de la description.

Ce dispositif d'occultation 10 comprend un store banne connu en soi comprenant une toile d'occultation et/ou de protection solaire 12, ou tablier, représenté déployée sur la figure 1, dont une extrémité est fixée à un tube d'enroulement 13 et l'autre extrémité à une barre de charge 14 portant un lambrequin 15.

La barre de charge 14 est portée par des bras tendoscopiques d'entraînement 16 équipés de ressort, destinés à tendre la toile. Ces bras 15 sont articulés chacun à une extrémité de la barre de charge 14, sur une portion intermédiaire 17 et au niveau de la façade 11.

Le déploiement et le repliement de la toile 12 s'opère par rotation du tube d'enroulement 13 dans un sens ou dans l'autre, entraîné par un moteur à courant continu 18 logé à l'intérieur de ce tube.

Dans ce mode de réalisation particulier de l'invention, le moteur 18 est avantageusement un moteur de tension nominale 24V, commercialisé sous l'appellation "Neo M 35N.m" par la société Nice (marque déposée).

Ce moteur 18 est solidarisé au tube d'enroulement 13 par l'intermédiaire d'une roue cannelée et d'une couronne.

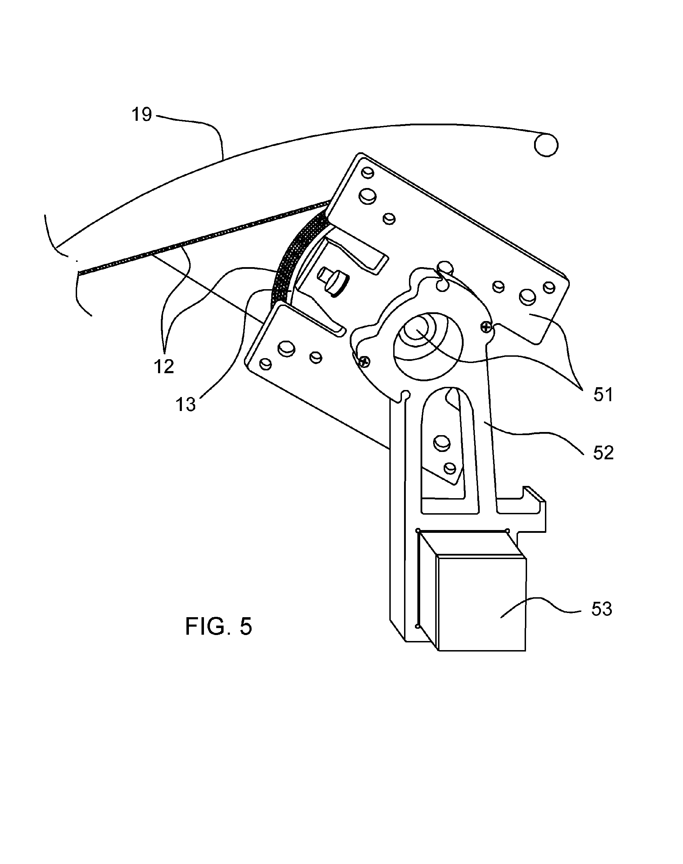

On peut voir sur la figure 5, dans une vue latérale partielle du dispositif 10 centrée sur une extrémité du tube d'enroulement 13, que le soutien de la tête 51 du moteur 18 est assuré par une joue de calage 52 fixée sur une barre 53 supportant le palier du tube d'enroulement 13.

Un positionnement convenable de la tête 51 du moteur 18 sur la joue 52 permet d'aligner l'axe du moteur 18 avec celui du tube d'enroulement 13.

Le moteur 18 possède en outre une électronique embarquée contrôlant la tension d'alimentation de ce moteur, de façon à ralentir sa vitesse de rotation si un couple trop important est exercé par la toile lors du déploiement.

Le tube d'enroulement 13 est monté sous un auvent de protection 19 qui porte, en partie supérieure, un boitier électrique 110 raccordé au moteur 18, et, en partie inférieure, une rampe d'éclairage inclinable 112 par lampes à led, fixée au dessous du tube d'enroulement 13.

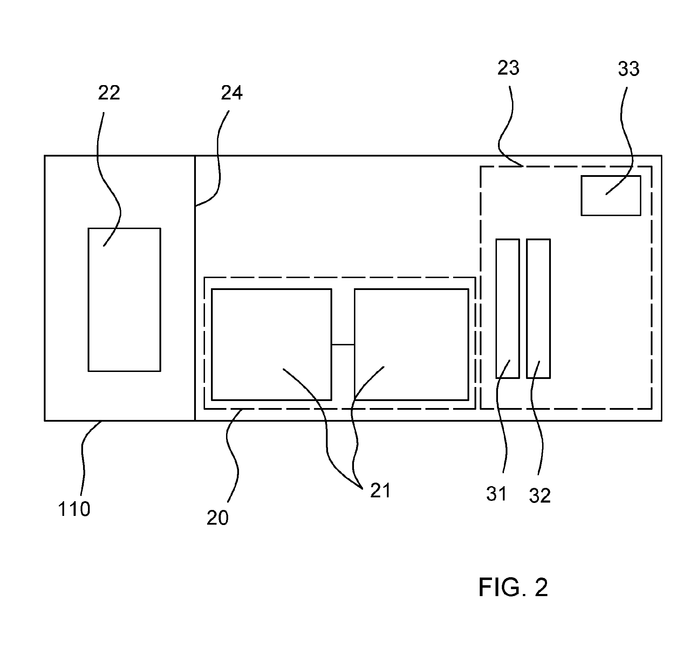

On a représenté le contenu du boitier 110 dans une vue schématique en coupe horizontale sur la figure 2.

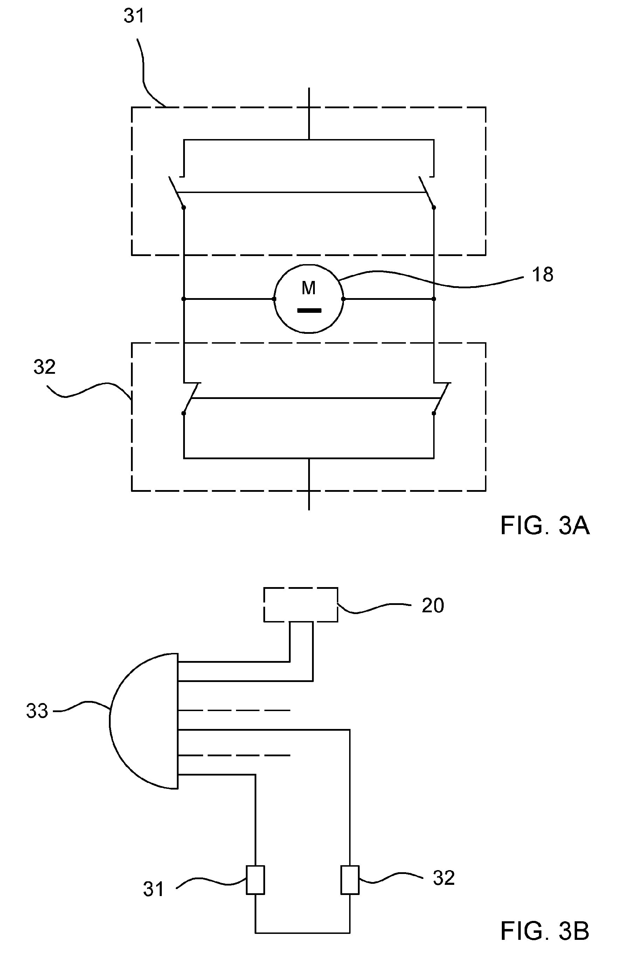

Le boitier 110 renferme une unité d'accumulateurs 20 composée de deux batteries d'accumulateurs identiques 21 agencées en série de 12V et d'une capacité de 7A.h, connectées d'un part à un régulateur de charge solaire à modulation de largeur d'impulsion 22 permettant d'atteindre l'état de pleine charge des batteries, et d'autre part à un ensemble de commutation et de commande à distance 23. Cet ensemble 23 est constitué comme on peut le voir en détail sur les schémas électriques de puissance et de commande des figures 3A et 3B, d'un premier 31 et d'un deuxième 32 relais à contacts normalement ouvert - normalement fermé, de type télérupteur modulaire, commandés par un récepteur radio 33, contrôlant le sens du courant circulant dans le moteur 18, de sorte à pouvoir inverser le sens de rotation du moteur et actionner le déploiement ou le repliement de la toile à l'aide d'une télécommande émettrice radio.

Une cloison séparatrice 24 formant blindage permet d'isoler les relais 31 et 32 et le récepteur 33, du champ magnétique généré par le régulateur 22.

Le boitier 110 porte deux panneaux ou modules solaires photovoltaïques 111 inclinés, réunis côte-à-côte dans un cadre.

Ces deux panneaux photovoltaïques 111, sont d'un type ordinaire à base de cellules en silicium monocristallin, et délivrent une tension comprise entre 12 et 18V en fonction de l'ensoleillement. Ils sont connectés avantageusement en série et reliés au régulateur 22.

On notera que des panneaux photovoltaïques à base de silicium monocristallin sont particulièrement bien adaptés aux régions froides et tempérées.

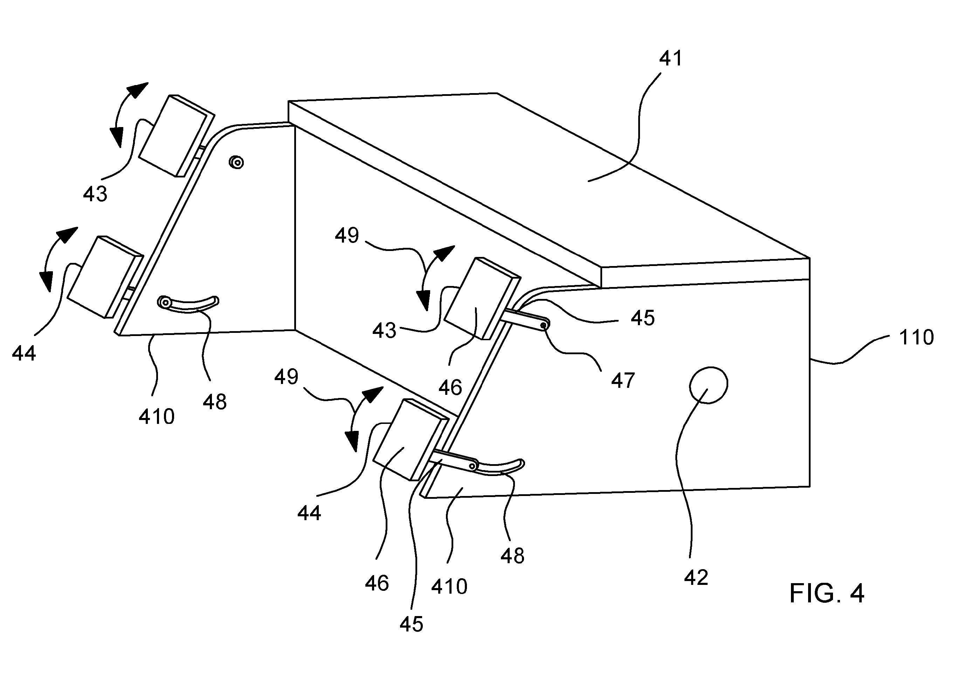

On a représenté le boîtier 110 seul en perspective sur la figure 4.

Le boitier 110 est un boitier isolé thermique par l'intérieur en dibond (marque déposée) traité anti-ultraviolets, présentant un couvercle étanche 41 et deux tamis d'aération 42 en vis-à-vis sur ses faces latérales.

Les faces latérales du boîtier 110 se prolongent par deux flasques 410 portant chacun deux pattes orientables 43 et 44, pouvant pivoter dans les directions indiquées par les doubles flèches 49.

Les pattes 43 et 44 sont de formes et de dimensions identiques. Elles présentent une âme 45 surmontée à angle droit d'une plaque de support des panneaux 46.

L'âme 45 de la patte supérieure 43 est solidarisée au flasque 410 à l'aide d'un axe 47 pénétrant dans un orifice circulaire formé dans le flasque 42.

Afin de pouvoir maintenir les plaques 46 des pattes supérieure 43 et inférieure 44 dans un même plan lorsqu'on règle l'inclinaison des panneaux solaires photovoltaïques 111, une lumière en arc de cercle 48 destinée à accueillir l'axe de la patte 44 est formée dans le flasque 410.

### 6.3 Autres caractéristiques optionnelles et avantages de l'invention

Dans des variantes du mode de réalisation de l'invention détaillé ci-dessus, il peut également être prévu :
- d'adapter les dimensions de la toile et les caractéristiques du dispositif d'occultation pour permettre de couvrir un toit d'une véranda ;
- un moteur dont la tension nominale est de 48V ou de 72V alimenté, à titre de simple exemple non limitatif, par quatre ou six modules solaires photovoltaïques ordinaires ;
- plusieurs crans à la base des pattes inclinables du boîtier pour pouvoir éloigner ou rapprocher les panneaux solaires du boîtier électrique.

Dans une autre variante, il peut être envisagé, sans sortir du cadre de l'invention, que le dispositif d'occultation comporte une cassette ou un coffre pour protéger la toile et/ou les bars des intempéries.

Il peut en outre être envisagé d'appliquer le principe général de l'invention consistant à alimenter un moteur à courant continu à l'aide d'une pluralité de modules solaires photovoltaïques montés en série pour commander l'ouverture et la fermeture d'un portail motorisé.

Les modes de réalisation ici décrits n'ont pas pour but de limiter la portée de l'invention. En conséquence, il pourra y être apporté de nombreuses modifications sans sortir du cadre de celle-ci telle que définie par les revendications.

## Revendications

1. Dispositif d'occultation (10) motorisé d'extérieur, notamment de type store banne, comprenant une toile d'occultation (12) dont une extrémité est solidarisée à un tube d'enroulement (13), et l'extrémité opposée est solidaire d'une barre de charge (14) portée par des moyens d'entraînement de ladite barre (14), ledit tube d'enroulement (13) étant entraîné en rotation par un moteur électrique (18) à courant continu afin de déployer ou replier ladite toile (12), ledit moteur (18) étant alimenté par une unité d'accumulateurs (20) connectée à au moins deux modules solaires photovoltaïques (111) montés en série, destinés à assurer la charge de ladite unité d'accumulateurs (20)
**caractérisé en ce que** ladite unité d'accumulateur (20) est logée dans un boitier (110) étanche et isolé solidaire d'un dispositif protégeant ladite toile (12) et/ou lesdits moyens d'entrainement de ladite barre des intempéries, lorsque ladite toile (12) est dans une position repliée,
et **en ce que** lesdits modules photovoltaïques (111) sont solidarisés audit boitier par l'intermédiaire d'au moins un élément orientable (43;44), de sorte à permettre un réglage de l'inclinaison desdits modules (111).

2. Dispositif d'occultation selon la revendication 1, **caractérisé en ce que** lesdits modules solaires photovoltaïques (111) sont sensiblement identiques.

3. Dispositif d'occultation selon l'une quelconque des revendications 1 et 2, **caractérisé en ce que** ledit moteur (18) est agencé de sorte à être alimenté sous une tension nominale de 24V.

4. Dispositif d'occultation selon l'une quelconque des revendications 1 à 3, **caractérisé en ce qu'**il comprend un dispositif de variation de la tension d'alimentation dudit moteur électrique (18) activé lors du déploiement ou du repliement de ladite toile (12).

5. Dispositif d'occultation selon l'une quelconque des revendications 1 à 4, **caractérisé en ce qu'**il comprend un relai à contact à ouverture (31;32) et un relai à contact à fermeture (31;32) actionné par des moyens de commande à distance, de façon à permettre un changement de sens de rotation dudit moteur (18).

6. Dispositif d'occultation selon l'une quelconque des revendications 1 à 5, **caractérisé en ce qu'**il comprend un régulateur de charge solaire à modulation de largeur d'impulsion (22).

7. Dispositif d'occultation selon l'une quelconque des revendications 5 ou 6, **caractérisé en ce que** lesdits relais (31;32) et/ou ledit régulateur de charge solaire (22) sont logés dans ledit boitier (110) étanche et isolé.

8. Dispositif d'occultation selon la revendication 1, **caractérisé en ce que** ledit élément orientable (43;44) coopère avec une lumière en arc de cercle (48) formée sur ledit boitier (110).

9. Dispositif d'occultation selon l'une quelconque des revendications 1 à 8, **caractérisé en ce que** ladite unité d'accumulateurs (20) comprend deux batteries d'accumulateurs (21) sensiblement identiques montées en série.

10. Dispositif d'occultation selon l'une quelconque des revendications 1 à 9, **caractérisé en ce qu'**il comprend des moyens d'éclairage montés sous ledit tube d'enroulement (13) et alimentés par ladite unité d'accumulateurs (20).

## Patentansprüche

1. Motorisierte äußere Verdunkelungsvorrichtung (10), insbesondere von der Art einer Markise, umfassend ein Verdunkelungstuch (12), dessen eines Ende mit einem Aufrollrohr (13) verbunden ist und dessen gegenüberliegendes Ende mit einer Spannstange (14) verbunden ist, die von den Antriebsmitteln der Stange (14) getragen wird, wobei das Aufrollrohr (13) durch einen elektrischen Gleichstrommotor (18) in Drehung versetzt wird, um das Tuch (12) auszurollen oder einzurollen, wobei der Motor (18) von einer Akkumulatoreneinheit (20) mit Strom versorgt wird, die mit mindestens zwei Photovoltaiksolarmodulen (111), die in Reihe geschaltet sind, verbunden ist, um die Ladung der Akkumulatoreneinheit (20) sicherzustellen, **dadurch gekennzeichnet, dass** die Akkumulatoreneinheit (20) in einem dichten und isolierten Gehäuse (110) angeordnet ist, das mit einer Vorrichtung verbunden ist, die das Tuch (12) und die Antriebsmittel der Stange vor Wettereinflüssen schützt, wenn das Tuch (12) in der eingerollten Stellung ist, und dass die Photovoltaiksolarmodule (111) über mindestens ein orientierbares Element (43; 44) mit dem Gehäuse verbunden sind, um die Regelung der Neigung der Module (111) zu ermöglichen.

2. Verdunkelungsvorrichtung gemäß Anspruch 1, **dadurch gekennzeichnet, dass** die Photovoltaiksolarmodule (111) im Wesentlichen identisch sind.

3. Verdunkelungsvorrichtung gemäß einem der Ansprüche 1 oder 2, **dadurch gekennzeichnet, daß** der Motor (18) so ausgebildet ist, dass er mit einer Nominalspannung von 24 V betreibbar ist.

4. Verdunkelungsvorrichtung gemäß einem der Ansprüche 1 bis 3, **dadurch gekennzeichnet, dass** sie weiterhin eine Vorrichtung zum Verändern der Einspeisspannung des elektrischen Motors (18) aufweist, der während des Ausrollens oder des Einrollens des Tuches (12) betätigt wird.

5. Verdunkelungsvorrichtung gemäß einem der Ansprüche 1 bis 4, **dadurch gekennzeichnet, dass** sie ein Öffnungskontaktrelais (31; 32) und ein Schließkontaktrelais (31; 32) umfasst, das von Fernsteuermitteln betätigt wird, um eine Änderung der Drehrichtung des Motors (18) zu bewirken.

6. Verdunkelungsvorrichtung gemäß einem der Ansprüche 1 bis 5, **dadurch gekennzeichnet, dass** sie einen Sonnenladungsregler (22) mit Impulsbreitenmodulation umfasst.

7. Verdunkelungsvorrichtung gemäß einem der Ansprüche 1 bis 6, **dadurch gekennzeichnet, dass** die Relais (31; 32) und/oder der Sonnenladungsregler (22) in dem dichten und isolierten Gehäuse (110) angeordnet sind.

8. Verdunkelungsvorrichtung gemäß Anspruch 1, **dadurch gekennzeichnet, dass** das orientierbare Element (43; 44) mit einem kreisbogenförmigen Langloch (48), das in dem Gehäuse (110) ausgebildet ist, zusammenwirkt.

9. Verdunkelungsvorrichtung gemäß einem der Ansprüche 1 bis 8, **dadurch gekennzeichnet, dass** die Akkumulatoreneinheit (20) zwei Akkumulatoren (21) umfasst, die im Wesentlichen identisch und in Reihe geschaltet sind.

10. Verdunkelungsvorrichtung gemäß einem der Ansprüche 1 bis 9, **dadurch gekennzeichnet, dass** sie Beleuchtungsmittel umfasst, die unter dem Aufrollrohr (13) angeordnet sind und von der Akkumulatoreneinheit (20) mit Strom versorgt werden.

## Claims

1. A motorized outdoor shading device (10), particularly of the awning type, comprising a shading fabric (12), one end of which is integral with a roller (13), and the opposite end is integral with a loading rail (14) supported by means for driving said rail (14), said roller (13) being driven in rotation by a direct current electric motor (18) to deploy or fold said fabric (12), said motor (18) being powered by an accumulator unit (20) connected to at least two solar photovoltaic modules (111) mounted in series, intended to ensure the charging of said accumulator unit (20),
**characterized in that** said accumulator unit (20) is housed in a leakproof and insulated housing (110) integral with a device protecting said fabric (12) and/or said means for driving said rail from bad weather, when said fabric (12) is in a folded position, and **in that** said photovoltaic modules (111) are integral with said housing by at least one pivoting part (43; 44), so as to enable the inclination of said modules (111) to be adjusted.

2. The shading device according to claim 1, **characterized in that** said solar photovoltaic modules (111) are substantially identical.

3. The shading device according to any one of claims 1 and 2, **characterized in that** said motor (18) is arranged so as to be supplied with a nominal voltage of 24 V.

4. The shading device according to any one of claims 1 to 3, **characterized in that** the device comprises a device for varying the supply voltage of said electric motor (18) that is activated when said fabric (12) is deployed or folded.

5. The shading device according to any one of claims 1 to 4, **characterized in that** the device comprises an opening contact relay (31; 32) and a closing contact relay (31; 32) activated by remote control means, so as to enable said motor (18) to change the direction of rotation.

6. The shading device according to any one of claims 1 to 5, **characterized in that** the device comprises a pulse-width modulation solar charge controller (22).

7. The shading device according to any one of claims 5 or 6, **characterized in that** said relays (31; 32) and/or said solar charge controller (22) are housed in said leakproof and insulated housing (110).

8. The shading device according to claim 1, **characterized in that** said pivoting part (43; 44) cooperates with a semi-circular slot (48) formed on said housing (110).

9. The shading device according to any one of claims 1 to 8, **characterized in that** said accumulator unit (20) comprises two substantially identical accumulator batteries (21) mounted in series.

10. The shading device according to any one of claims 1 to 9, **characterized in that** the device comprises lighting means mounted under said roller (13) and powered by said accumulator unit (20).
